# EUROPEAN PATENT APPLICATION

(11) **EP 1 168 286 A2**
(43) Date of publication of application: **02.01.2002**
(21) Application number: 01107613.0
(22) Date of filing: 27.03.2001
(51) Int. Cl.: G09F 21/04

(54) **Mobile advertising method and system**

(30) Priority: 23.05.2000 JP 2000151600
(71) Applicant: AISIN AW CO., LTD., Anjo-shi Aichi 444-1192 (JP)
(72) Inventor: Teshima, Toru, Aichi 444-1192 (JP)
(74) Representative: VOSSIUS & PARTNER

(57) **Abstract**

In the present invention, advertisement is presented without putting signboard for advertisement at a place hoped for. Network navigation center 10 outputs guide access information GAI to personal computer 18 of each sponsor of the ad over Internet 17 and receives registration of advertisement information ADI to present advertisement at spot for presenting advertisement from personal computer 18 of sponsor of the ad according to guide access information GAI. In addition, network navigation center 10 receives current position information API from mobile communication device 12 carried by automobile 11 viamobile telephone base station 14 and public telephone network 16. Network navigation center 10 transmits advertisement information ADI based on current position information API to mobile communication instrument 12 via public telephone network 16 and mobile telephone base station 14.

## Description

The present invention relates to mobile advertisement delivery method, mobile advertisement information delivery system, mobile advertisement information registration system, mobile advertisement information charge system, mobile communication instrument and recording media suitable for mobile communication instrument provided with current position detecting means capable of acquiring location information of current position.

Generally, signboard put by roadside is an effective means for recognizing walkers or drivers in travel of advertisement thereof. Therefore, demands for signboard advertisement lie in high level and signboard advertisement is broadly utilized in restaurants, automobile stores, supermarkets, convenience stores, bookstores, hospitals, hotels, other service industries and manufactures. In addition, for drivers while driving a car looking for a dropping point, for example a restaurant for taking a lunch, signboard advertisement of a restaurant is very useful.

However, signboards by roadside cannot be put too much in the same location. So there exists a case in which spatial limitation rejects a demand for putting signboards anew.

Further in a case that putting signboard anew is regulated by reason of deteriorating sight of surroundings, not only effective information can not be obtained for drivers but also efficient propaganda or advertisement is not available for persons engaging business in the neighborhood thereof. Furthermore, it was difficult contrarily for walkers or drivers to recognize a signboard advertisement of purpose at a place where is flooded in a narrow space with signboards of various business having high advertisement effect.

The first object of the present invention is to provide mobile advertisement information delivery method, mobile advertisement information delivery system and recording medium wherein sponsor of the ad can deliver advertisement information to persons passing by the spot for presenting advertisement without being limited by spot for presenting advertisement.

The second object of the present invention is to provide advertisement information delivery system capable of easily changing advertisement information to be delivered to persons passing by the spot for presenting advertisement.

The third object of the present invention is to provide advertisement information delivery system capable of delivering selected advertisement information to be delivered to persons passing by spot for presenting advertisement.

The fourth object of the present invention is to provide advertisement information delivery system capable of guiding persons passing by the spot for presenting advertisement to the location associated therein.

The fifth object of the present invention is to provide advertisement information registration system and recording media capable of finely setting the spot for presenting advertisement.

The sixth object of the present invention is to provide advertisement information charge system and recording media capable of calculating advertisement delivery charges easily.

The seventh object of the present invention is to provide mobile communication instrument capable of acquiring advertisement information merely passing by the spot for presenting advertisement unconsciously.

The present invention of claim 1 is characterized by mobile advertisement information delivering method, said method comprising delivering advertisement information from advertisement information delivery apparatus to mobile communication instrument based on current position information transmitted therefrom.

The present invention of claim 2 is characterized by mobile advertisement information delivering method comprising delivering advertisement information from computer system to mobile communication instrument, said method comprising step for storing advertisement information to present advertisement at a spot for presenting advertisement set by sponsor of the ad, step for receiving current position information of mobile communication instrument, step for retrieving advertisement information relating to current position from said stored advertisement information based on current position information of said mobile communication instrument, step for delivering said retrieved advertisement information to said mobile communication instrument, step for calculating advertisement delivery charges caused by said delivery, and step for charging or liquidating by payment said calculated advertisement delivery charges to sponsor of the ad.

The present invention of claim 3 is characterized by mobile advertisement information delivering system comprising advertisement information storage means for storing advertisement information to present advertisement at spot for presenting advertisement set by sponsor of the ad, mobile communication instrument detecting current position and transmitting said current position information and receiving said advertisement information and outputting advertisement based on said advertisement information to output part, and advertisement information delivery means for receiving current position information from said mobile communication instrument and retrieving advertisement information relating to either of spot for presenting advertisement agreeing with said current position or spot for presenting advertisement lying nearby current position from said advertisement information storage means and delivering said retrieved advertisement information to said mobile communication instrument.

The present invention of claim 4 is characterized by mobile advertisement information delivery system according to claim 3 wherein said advertisement information delivery means having delivery number of times storage means for storing delivery number of times of advertisement information at each time when advertisement information is delivered to mobile communication instrument.

The present invention of claim 5 is characterized by mobile advertisement information delivery system according to claim 3 or 4 wherein said advertisement information delivery means having use number of times storage means for storing use number of times concerning mobile communication instrument as delivery target of advertisement information at each time when advertisement information is delivered thereto.

The present invention of claim 6 is characterized by mobile advertisement information delivery system according to any of claims 3 to 5 wherein advertisement information relating to spot for presenting advertisement stored in said advertisement information storage means includes image data picturing at least one advertisement of trade name, pet name, business contents, brand name, guide map, whereby said output part of said mobile communication instrument is a display part displaying advertisement thereon based on said image data.

The present invention of claim 7 is characterized by mobile advertisement information delivery system according to any of claims 3 to 6 wherein said advertisement information storage means stores location information for retrieving a path from current position to advertising location and displaying said path from current position to advertising location on display part of said mobile communication instrument.

The present invention of claim 8 is characterized by mobile advertisement information delivery system according to any of claims 3 to 7 comprising delivery condition storage means for storing delivery condition of advertisement information whereby said advertisement information delivery means determines delivery to said mobile communication instrument according to said delivery condition.

The present invention of claim 9 is characterized by mobile advertisement information delivery system according to claim 8 wherein said delivery condition is at least either one of presenting time period, presenting time zone, day, age group, sex distinction.

The present invention of claim 10 is characterized by mobile advertisement information delivery system according to any of claims 3 to 9 wherein said mobile communication instrument is navigation device carried by a vehicle, said navigation device comprising transmitter transmitting current position information to said advertisement information delivery means and receiver receiving advertisement information.

The present invention of claim 11 is characterized by mobile advertisement information delivery system according to any of claims 3 to 9 wherein said mobile communication instrument comprises navigation device carried by a vehicle and mobile telephone, and said navigation device transmits current position information and advertisement information to and from advertisement information delivery means through said mobile telephone.

The present invention of claim 12 is characterized by mobile advertisement information delivery system according to any of claims 3 to 9 wherein said mobile communication instrument is mobile telephone, and said mobile telephone is provided with current position detecting means for detecting current position of own.

The present invention of claim 13 is characterized by mobile advertisement information registration system comprising advertisement information delivery means for delivering advertisement information to mobile communication instrument based on current position information transmitted from said mobile communication instrument, advertisement information input means for setting advertisement information to present advertisement at spot for presenting advertisement by sponsor of the ad, advertisement information storage means for storing advertisement information, and management means for delivering data between said advertisement information input means over Internet or wireless Internet and writing advertisement information from said advertisement information input means in advertisement information storage means.

The present invention of claim 14 is characterized by mobile advertisement information registration system according to claim 13 wherein said advertisement information input means is personal computer or mobile communication instrument.

The present invention of claim 15 is characterized by mobile advertisement information registration system according to claim 13 or 14 comprising delivery condition storage means for storing delivery condition relating to said advertisement information whereby delivery condition along with said advertisement information is input by said advertisement information input means and so is stored in corresponding storage means respectively through said management means.

The present invention of claim 16 is characterized by mobile advertisement information registration system according to claim 15 wherein said advertisement delivery condition is at least either one of presenting time period, presenting time zone, day, age group, sex distinction.

The present invention of claim 17 is characterized by mobile advertisement information registration system according to any of claims 13 to 16 comprising price information storage means for storing delivery price relating to at least one of said advertisement information and delivery condition whereby said price information storage means outputs said delivery price to advertisement information input means through management means.

The present invention of claim 18 is characterized by mobile advertisement information registration system according to any of claims 13 to 17 comprising delivery number of times storage means for storing delivery number of times of advertisement information at each time when advertisement information is delivered from advertisement information delivery means to mobile communication instrument.

The present invention of claim 19 is characterized by mobile advertisement information charge system comprising charge management means for calculating based on advertisement contents or delivery condition advertisement delivery charges of advertisement information delivered from advertisement information delivery means to mobile communication instrument according to current position information transmitted therefrom.

The present invention of claim 20 is characterized by mobile advertisement information charge system comprising advertisement information storage means for storing advertisement information to present advertisement at spot for presenting advertisement set by sponsor of the ad, advertisement information delivery means for delivering advertisement information to mobile communication instrument based on current position information transmitted from mobile communication instrument, advertisement delivery charge storage means for storing advertisement delivery charges caused by delivery of the advertisement information, and management means for calculating advertisement delivery charges based on delivery price relating to at least one of advertisement information contents delivered and advertisement information delivery condition, and storing the resultant in said advertisement delivery charge storage means.

The present invention of claim 21 is characterized by mobile advertisement information charge system comprising charge management means for calculating based on delivery number of times advertisement delivery charges of advertisement information delivered from advertisement information delivery means to mobile communication instrument based on current position information transmitted therefrom.

The present invention of claim 22 is characterized by mobile advertisement information charge system comprising advertisement information storage means for storing advertisement information to present advertisement at spot for presenting advertisement set by sponsor of the ad, advertisement information delivery means for delivering advertisement information to said mobile communication instrument based on current position information transmitted therefrom, advertisement delivery charge storage means for storing advertisement delivery charges caused by advertisement information delivery, and management means for calculating advertisement delivery charges based on delivery number of times of delivered advertisement information and storing said delivery charges in said advertisement delivery charge storage means.

The present invention of claim 23 is characterized by mobile advertisement information charge system comprising charge management means for calculating based on amount of communication data advertisement delivery charges of advertisement information delivered from advertisement information delivery means to mobile communication instrument based on current position information transmitted therefrom.

The present invention of claim 24 is characterized by mobile advertisement information charge system comprising advertisement information storage means storing advertisement information to present advertisement at spot for presenting advertisement set by sponsor of the ad, advertisement information delivery means for delivering said advertisement information to mobile communication instrument based on current position information transmitted therefrom, advertisement information delivery charge storage means for storing advertisement delivery charges caused by delivery of said advertisement information and management means for calculating advertisement delivery charges based on amount of communication data when said advertisement information is delivered and storing delivery charges in said advertisement delivery charge storage means.

The present invention of claim 25 is characterized by mobile advertisement information charge system comprising advertisement information storage means for storing advertisement information to present advertisement at spot for presenting advertisement set by sponsor of the ad, advertisement information delivery means for delivering said advertisement information to mobile communication instrument based on current position information transmitted therefrom, advertisement delivery charge storage means for storing advertisement delivery charges caused by delivery of said advertisement information, price information storage means for storing delivery charge relating to at least either one of the advertisement information or delivery condition, and management means for calculating advertisement delivery charge based on delivery number of times and delivery charges of advertisement information at each time when said advertisement information is delivered and storing said delivery charges in said advertisement delivery charge storage means.

The present invention of claim 26 is characterized by mobile communication instrument having current position detecting means for detecting current position and display part displaying picture image comprising storage means for storing advertisement information beforehand relating to spot for presenting advertisement where advertisement is presented, and advertisement presenting control means for presenting advertisement information relating to spot for presenting advertisement to said display part when current position detected by said current position detecting means agrees with said spot for presenting advertisement.

The present invention of claim 27 is characterized by recording medium storing advertisement information registration program for processing steps by computer, said steps comprising step for making sponsor of the ad input spot for presenting advertisement, step for storing spot for presenting advertisement input by sponsor of the ad, step for making sponsor of the ad input advertisement presented at spot for presenting advertisement, step for storing advertisement input by sponsor of the ad and presented at spot for presenting advertisement, step for making sponsor of the ad input advertisement delivery condition, and step for storing delivery condition input by sponsor of the ad.

The present invention of claim 28 is characterized by recording medium storing advertisement information delivery program for processing steps by computer, said steps comprising step for inputting current position information from mobile communication instrument and retrieving advertisement information relating to either of spot for presenting advertisement relating to the current position information from advertisement information storage means storing advertisement information at spot for presenting advertisement or spot for presenting advertisement nearby current position, and step for delivering retrieved advertisement information to said mobile communication instrument.

The present invention of claim 29 is characterized by recording medium storing advertisement information charge program for processing steps by computer, said steps comprising step for calculating advertisement delivery charges caused by delivery for each sponsor of the ad, step for preparing details of advertisement information delivered to each sponsor of the adduring a given time period and advertisement delivery charges, step for withdrawing advertisement delivery charges of each sponsor of the ad from their bank account, and step for preparing details of advertisement information delivered and advertisement delivery charges in specifications.

The present invention of claim 30 is characterized by recording medium storing advertisement information presenting program for processing steps by computer, said steps comprising step for computing current position and transmitting said computed current position information , and step for displaying advertisement on display part based on advertisement information received.

Fig. 1 shows a system configuration block diagram of mobile advertisement information delivery system of an embodiment according to the present invention.

Fig. 2 is a block diagram which shows architecture of network navigation center.

Fig. 3 is a block circuit diagram which shows architecture of vehicle navigation device.

Fig. 4 is a drawing which shows map displayed on the screen of display unit.

Fig. 5 is a drawing which shows advertisement displayed on the screen of display unit.

Fig. 6 is a drawing which shows a guide path to the location (guide position) on a map displayed on the screen of display unit.

Fig. 7 is a drawing which shows the condition having plurality of different advertisements displayed on the screen of display unit.

Fig. 8 is a drawing which shows display condition having selected the spot for presenting advertisement.

Fig. 9 is a drawing which shows display condition having selected each corner of the crossroad as spot for presenting advertisement.

Fig. 10 is a drawing which shows display condition of square frame having selected each corner of the crossroad as spot for presenting advertisement.

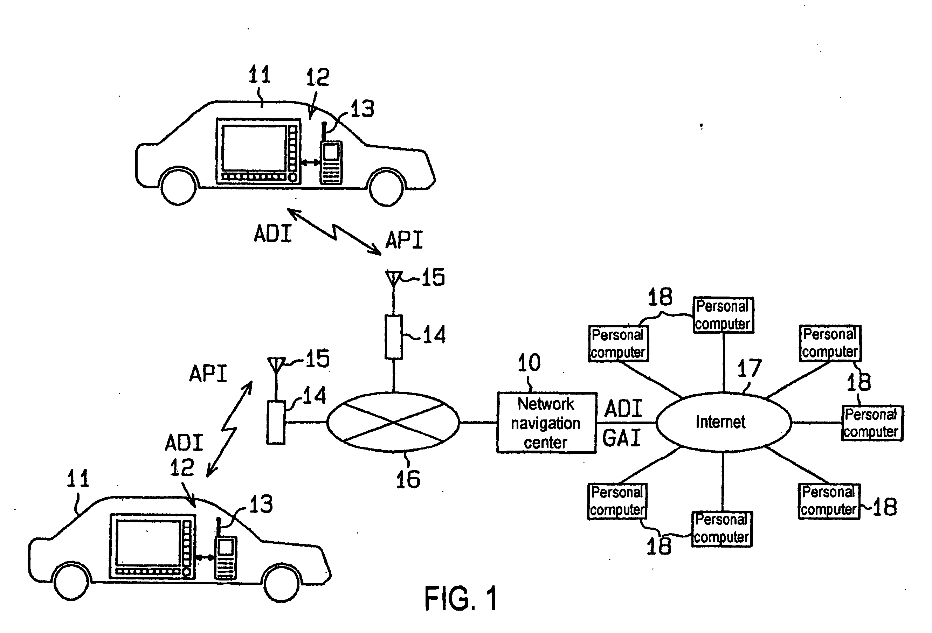

One example embodying the present invention is explained as follows with the aid of drawings. Fig. 1 shows a figure of system configuration of mobile advertisement information delivery system.

In Fig. 1, network navigation center 10 comprising computer system is constituted to transmit or receive advertisement information ADI which user wants to acquire or various information including current position information API of user himself (vehicle of his own) to be informed to center 10 between mobile communication instrument 12 carried by automobile 11 of advertisement information user. Explaining in detail, various information from mobile communication instrument 12 is transmitted by radio signal via aerial 13 thereof. Radio signal is received by base station aerial 15 of mobile telephone base station 14 and transmitted via public telephone network 16 to network navigation center 10. On the contrary, various information from network navigation center 10 is transmitted by radio signal from base station aerial 15 of mobile telephone base station 14 via public telephone network 16. Radio signal of this center side is received by aerial 13 of mobile communication instrument 12 and transmitted thereto. In other words, network navigation center 10 is connected to mobile communication instrument 12 carried by automobile 11 over so-called wireless Internet. Additionally, instead of connecting mobile communication instrument 12 such as carried by automobile 11 with network navigation center 10 via public telephone network 16, a method of directly connecting mobile communication instrument 12 with network navigation center 10 over wireless Internet may be adopted by providing radio receiver/transmitter, TA (Terminal Adapter) and DSU (Digital Service Unit) at mobile communication instrument side.

On the other hand, network navigation center 10 comes to be connected to personal computer 18 of each sponsor of the ad as advertisement information input means over Internet 17. And network navigation center 10 comes to transmit to or receive from personal computer 18 various information including advertisement information ADI for delivering advertisement at the spot for presenting advertisement selected by each sponsor of the ad and guide access information GAI for guiding a way how to input said advertisement information ADI to each sponsor of the ad. It should be noted that if personal computer 18 possessed by each sponsor of the ad is equipped with wireless communication facility, personal computer 18 and network navigation center 10 may be connected over wireless Internet. Of course, sponsor of the ad may employ mobile telephone and deliver various information to network navigation center 10.

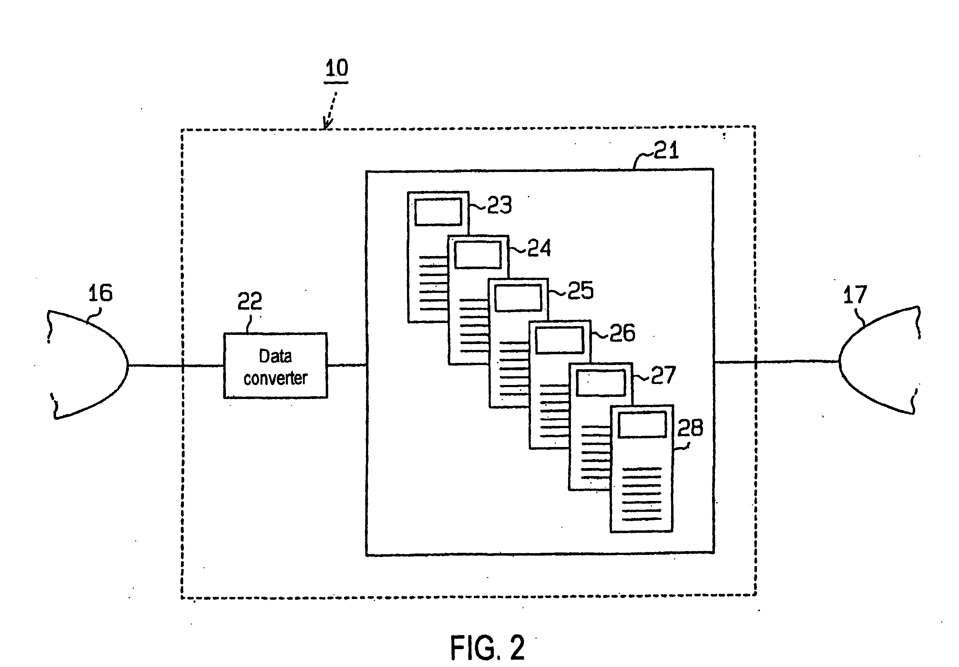

Network navigation center 10 as shown in Fig. 2 is composed of server group 21 and data converter 22 comprising advertisement information delivery apparatus. Server group 21 comprises map server 23, advertiser/user server 24, spot for presenting advertisement/advertisement information server 25, charge server 26, authentication server 27 and management server 28.

Map server 23 stores and manages map data (road map, residential area map, building geometry map, etc.), intersection data, address data, etc. Advertiser/user server 24 as sponsor storage means stores and manages sponsor data of sponsor of the ad presenting advertisement to users at certain location nearby roadside or user data information of user utilizing said advertisement. Sponsor data is composed of name data, address data, business contents data (data related to type of industry that the advertisement provides e.g. food and drink business, automobile sale, convenience store, internal medicine, hotel, etc.). User data is composed of name data, address data, age data, distinction of sex data, occupation data, mobile telephone number, maker data of automobile 11, data by car type (sedan, recreational vehicle, etc.) and vehicle name data.

Spot for presenting advertisement/advertisement information server 25 as advertisement information storage means stores and manages spot for presenting advertisement data, advertisement data of advertisement contents presented at spot for presenting advertisement and guide position data as location information of the location mentioned in said advertisement. Spot for presenting advertisement in the present embodiment is a position specified on map data stored in map server 23 and expressed with latitude and longitude. Advertisement data in the present embodiment comprises trade name, pet name, business contents, brand name or advertisement image data for drawing a advertisement picture of guide map and advertisement voice data to announce advertisement to user in a voice. Guide position data in the present embodiment is a position specified on map data stored in map server 23 same as spot for presenting advertisement data and expressed with latitude and longitude.

Also, spot for presenting advertisement/advertisement information server 25 stores and manages travel direction data for selecting to which user should be delivered in accordance with the direction of traveling or passing by spot for presenting advertisement. In the present embodiment, travel direction data, spot for presenting advertisement data, advertisement data (advertisement image data, advertisement voice data) and guide position data are dealt as advertisement data.

Furthermore, spot for presenting advertisement/advertisement information server 25 comprises delivery condition storage means, stores and manages delivery condition data relating to delivery condition when the advertisement is presented. Delivery condition data in the present embodiment is comprised of presenting time period data, presenting time zone data, age group data, distinction of sex data, data by automobile manufacturer, data by car type and vehicle name data.

Presenting time period data is data relating to time period of delivering advertisement, such as for example from August 1 to December 31. Presenting time zone data is data relating to presenting time zone such as for example since 9:30 p.m. to 10:00 a.m. Age group data is data relating to age group of user delivered advertisement such as for example 18 years old - 55 years old. Distinction of sex data is data relating to the distinction of sex of user delivered advertisement such as for example a male. Data by automobile manufacturer is data relating to maker of automobile 11 owned by user delivered advertisement. Data by car type is data relating to type of automobile 11 owned by user delivered advertisement such as for example sedan or recreational vehicle. Car name data is data relating to name of the automobile 11 owned by user delivered advertisement.

Charge server 26 as price information storage means stores and manages price data relating to delivery price of the advertisement delivered to user. Price data in the present embodiment is composed of spot for presenting price data, presenting time period price data and presenting time zone price data. Spot for presenting price data is price of spot for presenting advertisement and is determined beforehand for each position on map data stored in map server 23 such as for example all locations by roadside. Presenting time period price data is data relating to time period for delivering advertisement and is determined according to each time period beforehand. Presenting time zone price data is data relating to price of presenting time zone for presenting advertisement and is determined beforehand according to each time zone.

In addition, charge server 26 comprises delivery number of times storage means, advertisement delivery charge storage means and use number of times storage means, and stores and manages delivery number of times data related to delivery number of times for every advertisement delivered to each user, advertisement delivery charge data related to advertisement delivery charges to ask for sponsor of the ad and user list data of the user related to the user received advertisement delivery for every advertisement.

Authentication server 27 stores and manages sponsor of the ad authentication data consisting of ID code, password and bank account number for withdrawing advertisement delivery charges of sponsor of the ad, and user authentication data consisting of user's ID code and password.

Management server 28 as advertisement information delivery means or management means is server supervising and managing each server 23 to 27 and connected with personal computer of each sponsor of the ad over Internet 17 and connected to mobile communication instrument 12 by means of data converter 22, public telephone network 16 and mobile telephone base station 14. Management server 28 comprises store part as recording medium and stores advertisement information registration program, advertisement information delivery program and advertisement information charge program therein.

Management server 28 executes various arithmetic processing according to these advertisement information registration program, advertisement information delivery program and advertisement information charge program. Advertisement information registration program is program to register advertisement delivered to user possessing mobile communication instrument 12 to network navigation center 10 by means of each personal computer 18. Advertisement information delivery program is program to deliver advertisement registered by personal computer 18 from network navigation center 10 to mobile communication instrument 12 owned by user. Advertisement information charge program is program to calculate advertisement delivery charge caused by advertisement delivery to user and ask sponsor of the ad for advertisement delivery charges.

Now, registering step of an advertisement based on advertisement information registration program is explained. At first, when there is accessing against network navigation center 10 from personal computer 18 over Internet 17, management server 28 executes operation for advertisement application to personal computer 18 of sponsor of the ad based on advertisement information registration program.

Management server 28 reads map data, intersection data and address data from map server 23 based on advertisement information registration program to output them to personal computer 18 and outputs display data for indicating selection of spot for presenting advertisement to personal computer 18. Personal computer 18 displays a map based on map data etc. and indication for the effect of selecting spot for presenting advertisement to let sponsor select said spot. If an sponsor of the ad wants to specify guide root then, it is assumed that guide root can be set on screen of personal computer 18.

To be concrete, management server 28 enlarges display from wide area map to detail map based on key operation or mouse control of personal computer 18 as well as map display of vehicle navigation device and scrolling the picture displays on the screen of personal computer 18 the map in which target spot for presenting advertisement is shown.

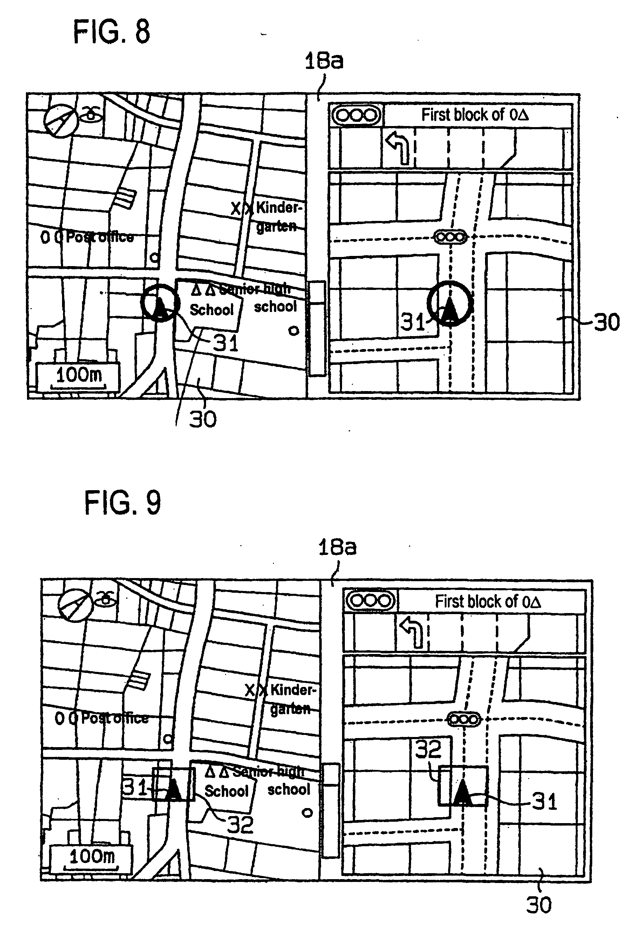

For example, when map 30 indicating target spot for presenting advertisement is displayed on the screen 18a of personal computer 18 as shown in Fig. 8, management server 28 displays the effect of specifying spot for presenting advertisement with cursor 31 of arrow figure responsive to key operation or mouse control of personal computer 18. A sponsor of the ad operates key or mouse of personal computer 18 to put cursor 31 to spot for presenting advertisement by roadside shown in map 30. Then, a direction of the cursor 31 of arrow figure is selected along roadside, too. This operation is a selection of travel direction and this is because of selecting the user to be delivered the advertisement passing by spot for presenting advertisement according to their travel direction. Alternatively, by displaying residential area map showing the configuration of buildings on display screen 18a, spot for presenting advertisement may come to be selected by at least selecting one configuration region.

Also, in the case of delivering advertisement to users passing by spot for presenting advertisement in either way, selecting operation for the effect of selecting both direction operation by key or mouse of personal computer 18 may be done. Furthermore, it comes to be selected by pointing cursor 31 on intersection when selecting each corner of intersection of the crossroads etc.

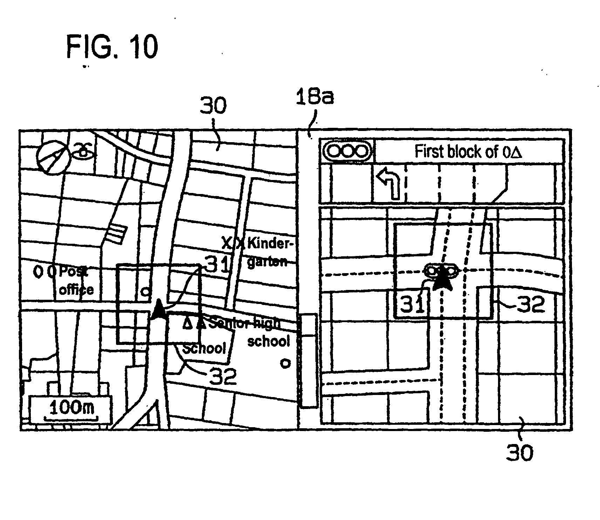

When spot for presenting advertisement is selected by personal computer 18, management server 28 displays the provision scope of advertisement to user on display screen 18a of personal computer 18. In the present embodiment, square frame 32 surrounding cursor 31 is displayed as shown in Fig. 9 and informs the effect that advertisement is provided within the scope of square frame 32. Therefore, a sponsor of the ad can ensure the scope of advertisement delivered to users. In addition, Fig. 10 shows display condition of square frame 32 when each corner of the crossroads was selected.

If determination by key or mouse is operated in order to select spot for presenting advertisement and determine the spot, management server 28 stores temporarily data of spot for presenting advertisement related to spot for presenting advertisement and travel direction data related to travel direction in storage means of management server 28.

Successively management server 28 displays demand for advertisement image data of an advertisement presented at spot for presenting advertisement on personal computer 18 of sponsor of the ad. Then management server 28 displays a notice for demanding voice message of an advertisement by voice provided at spot for presenting advertisement together.

In response to the notice sponsor of the ad outputs advertisement image data of advertisement and advertisement voice data by voice for providing from personal computer 18 to management server 28. Management server 28 stores advertisement image data and advertisement voice data temporarily along with aforementioned spot for presenting advertisement data and travel direction data in storage device of management server 28.

Successively management server 28 displays a notice to personal computer 18 of a sponsor of the ad for selecting whether guide path for guiding from spot for presenting advertisement to location related to advertisement contents is displayed or not. If provision of guide route is selected by operating key or mouse of personal computer 18, management server 28 outputs map data to personal computer 18 same as aforementioned selection of spot for presenting advertisement to display a map on the display part of personal computer 18.

Sponsor of the ad executes decision operation in the same way as mentioned above by operating key or mouse of personal computer 18 to put cursor 31 on the guide location (guide position) by roadside indicated in map 30. Management server 28 stores guide position data related to guide location in storage device temporarily in management server 28.

If selecting guide position or not selecting guide position is done by key or mouse operation, management server 28 displays on screen 18a of personal computer 18 of sponsor of the ad a notice for selecting delivery condition of presenting time period, presenting time zone, age group of user delivered advertisement, distinction of sex of user delivered advertisement, the automobile manufacturer of a car possessed by user delivered advertisement, car type and car name, etc.

Operating by key or mouse of personal computer 18, advertisement delivery time period, delivery time zone, age group of user delivered advertisement, distinction of sex of user delivered advertisement, the automobile manufacturer of car possessed by user delivered advertisement, car type and car name are set by sponsor of the ad. For example, presenting time period is set as "20xx April 1 to 20xx October 14" or presenting time zone is set as "from 10:00 a.m. to 9:30 p.m.". And age group of user is set as "20 years old - 55 years old", distinction of sex is set as "both male and female". Furthermore, automobile manufacturer as "x x x line automobile industry" or car type as "a recreational vehicle" or car name as "x x x" is set. After finishing to set delivery condition, management server 28 temporarily stores presenting time period data, presenting time zone data, age group data, distinction of sex data, data by automobile manufacturer, data by car type and car name data in storage device of management server 28.

Management server 28 successively calculates delivery charge of the advertisement on the basis of spot for presenting advertisement, presenting time period and presenting time zone selected by sponsor of the ad. To explain in detail, management server 28 reads price data stored in charge server 26 and calculates price of spot for presenting advertisement (spot for presenting advertisement price) selected from price of spot for presenting advertisement data, price of presenting time period (presenting time period price) selected from price of presenting time period data and price of presenting time zone (presenting time zone price) selected from price of presenting time zone data.

After calculating advertisement delivery charge (= spot for presenting advertisement price + presenting time period price + presenting time zone price), management server 28 displays advertisement delivery charge and its details on personal computer 18 of a sponsor of the ad and displays a notice for making sponsor of the ad select whether he would register with said delivery charge.

Registration is done by selecting name (nomenclature), address, ID code, password and bank account number of the sponsor of the ad. After sponsor of the ad operated by key or mouse of personal computer 18 to register name (nomenclature), address, business contents, ID code, password and bank account number, management server 28 stores each temporarily stored data in each corresponding server 24 to 27. Explaining in detail, sponsor of the ad data such as name (nomenclature), business contents or address are stored in advertiser/user server 24. Spot for presenting advertisement, travel direction data, image data of advertisement, voice data of advertisement, guide position data, presenting time period data, presenting time zone data, age group data, distinction of sex data, data by automobile manufacturer, data by vehicle type and vehicle name data are stored in spot for presenting advertisement/advertisement information server 25. Authentication data such as ID code, password and bank account number of the sponsor of the ad are stored in authentication server 27.

After registration of password is over, registration of advertisement to network navigation center 10 by sponsor of the ad is all finished. In other words, processing operation of advertisement information registration program is finished. And management server 28 executes advertisement information delivery program in response to current position information API from mobile communication instrument 12 and reads out advertisement information ADI (in the present embodiment, spot for presenting advertisement data, travel direction data, advertisement image data, advertisement voice data or guide position data) from spot for presenting advertisement/advertisement information server 25 and delivers them to mobile communication instrument 12.

Then, management server 28 converts advertisement information ADI read for delivery by data converter 22 and outputs them to mobile telephone base station 14 via public telephone network 16. Further, advertisement information ADI is delivered to mobile communication instrument 12 from mobile telephone base station 14. In addition, data converter 22 is made of signal processing circuit enabling advertisement information ADI read out from management server 28 to be output to mobile telephone base station 14 via public telephone network 16. Data converter 22 is also made of signal processing circuit enabling management server 28 to receive information output from public telephone network 16 thereto.

In addition, if sponsor of the ad wants to change advertisement information ADI, he may accesses network navigation center 10 and change desired data after inputting ID code and password.

In the present embodiment, user data of user is stored and managed in advertiser/user server 24 by means of user's submitting application to network navigation center 10. In other words, by operating personal computer in network navigation system 10 in accordance with application sheet, user data consisted of name, address, age, distinction of sex, occupation, mobile telephone number, maker of automobile 11, vehicle type are stored in advertiser/user server 24. Then, user authentication data consisted of ID code and password are input together and stored in authentication server 27. Therefore, user can change address or mobile telephone number if desired in future by operating personal computer or mobile telephone over Internet. In addition, it is a matter of course that user can apply user data by on-line application without submitting application sheet.

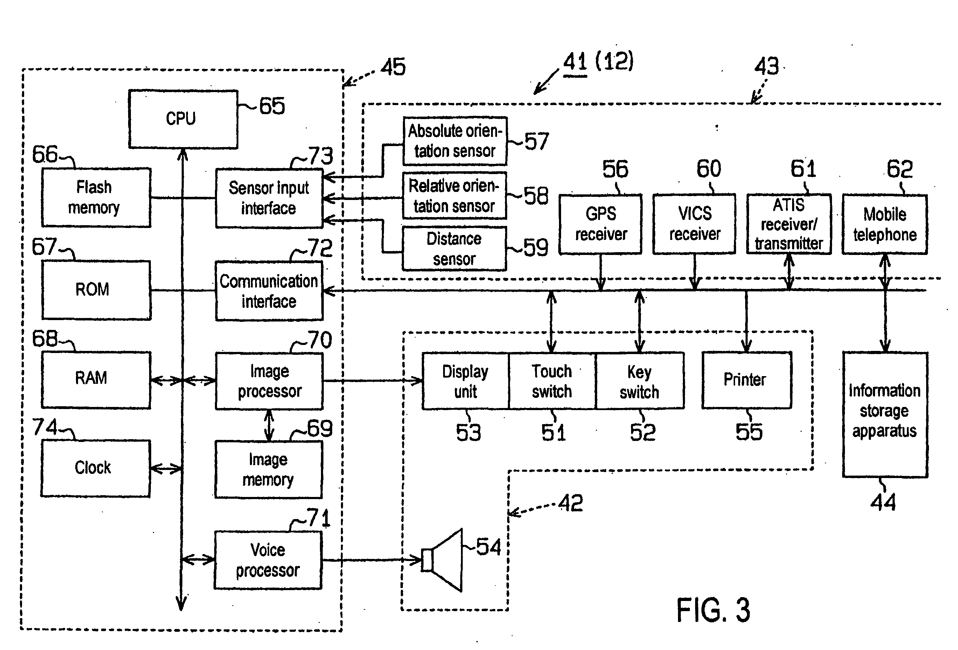

A description is made as follows of mobile communication instrument 12 carried by automobile 11 which is delivered advertisement registered in network navigation center 10. Mobile communication instrument 12 consists of vehicle navigation device 41 which comprises input-output device 42, current position detection apparatus 43, information storage apparatus 44 and main control unit 45 as shown in Fig. 3.

Input-output device 42 is device for indicating navigation processing to main controller 45 according to driver's will to output guide information by voice or image on screen when driver wants them. Also, input-output device 42 is device for indicating main controller 45 to output advertisement by voice or image on screen when driver wants them by means of advertisement information ADI registered in network navigation center 10.

Input-output device 42 comprises touch switch 51, key switch (jog key and power switch) 52, display 53, speaker 54, printer 55. Touch switch 51 is provided on screen 53a of display unit 53 and used to request for destination, telephone number, current position on map or path guide (including path guide for guiding to the location mentioned in advertisement contents). Key switch 52 is provided in perimeter of display unit 53 and is used like said touch switch 51 to request for destination, telephone number, current position on map or path guide.

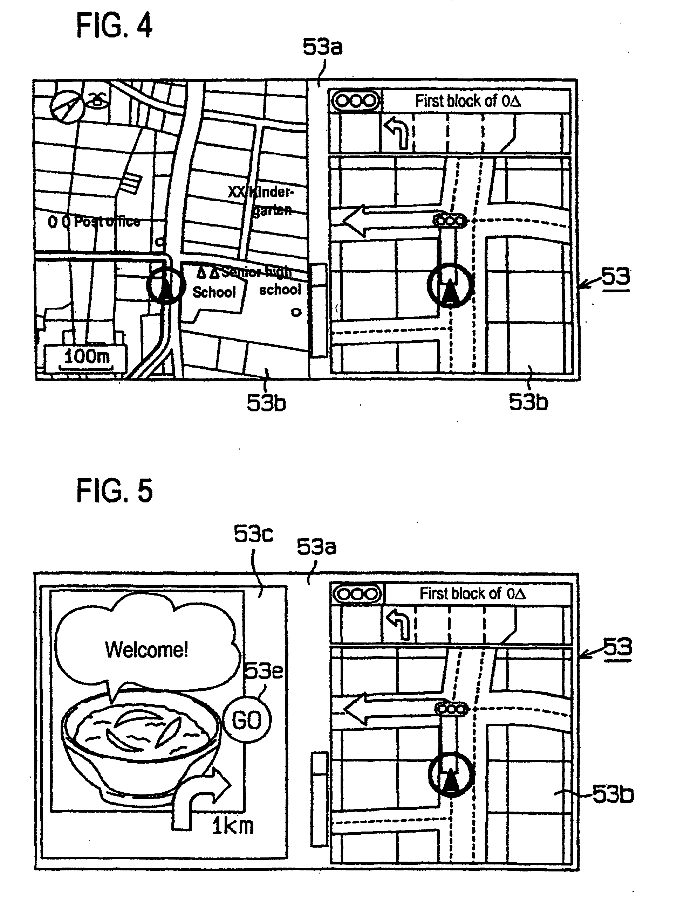

Display unit 53 as output part and display part is color liquid crystal display and displays map 53b and advertisement 53c based on map data and drawing data as shown in Fig. 4 to 7 on screen 53a or automatically displays path guide on screen 53a by request of driver. Speaker 54 as output part outputs path guide by voice and outputs advertisement message by voice based on advertisement voice data. Printer 55 records data processed by main controller 45 in chart recording paper.

Current position detecting apparatus 43 as current position detecting means detects or receives information related to current position of vehicle. Current position detecting apparatus 43 comprises GPS receiver 56, absolute orientation sensor 57, relative orientation sensor 58, distance sensor 59, VICS (Vehicle Information and Communication System) receiver 60, ATIS receiver/transmitter 61 and mobile telephone 62.

GPS receiver 56 utilizes GPS (Global Positioning System ) to detect current position of vehicle, vehicle orientation, vehicle speed or etc. Absolute orientation sensor 57 is composed of earth magnetism sensor etc. Relative orientation sensor 58 is composed of steering sensor, gyroscope or etc. Distance sensor 59 calculates the mileage from number of revolutions of a wheel.

VICS receiver 60 is apparatus receiving road information by means of FM multiple, radio wave beacon or light beacon. ATIS receiver/transmitter 61 is receiver/transmitter changing information needed for navigation between ATIS (Advanced Traffic Information Service) by request of driver.

Mobile telephone 62 receives advertisement information (spot for presenting advertisement data etc.) from network navigation center 10 transmitted from aerial 15 of mobile telephone base station 14 via public telephone network 16. Mobile telephone 62 transmits current position information API detected by vehicle navigation device 41 as current position of automobile 11 to mobile telephone base station 14 and transmits the current position information API to network navigation center 10 via public telephone network 16.

Information storage apparatus 44 as recording medium stores navigational program and data. Navigation program is composed of map drawing routine, path retrieving routine, path guide routine, current position calculation routine, destination position setting operation control routine, etc. and consisted of application part and operating system part for processing navigational signal. In other words, program for retrieving path guide etc., program for display control needed for path guide, program for voice output control needed for voice guide, data needed for said program and further display information needed for path guide and map display are stored therein.

To be concrete, program which sets destination or passing point based on current position from current position detecting apparatus 43 and input signal from touch switch 51 or key switch 52, and carries out path retrieving by means of road retrieval data, program which converts road retrieval data based on traffic information acquired from VICS receiver 60 or ATIS receiver/transmitter 61 and executes path retrieval again, and program which determines map drawing, map matching, voice output timing or voice phrase along with path.

On the other hand, data is map data (road map, residential area map, building geometry map, etc.), intersection data, node data, road data, photography data, registered spot data, destination point data, destination read data, telephone number data, address data and all other data needed for navigation device. In addition, in the present embodiment, these data are the same as data stored in map server 23 of aforementioned network navigation center 10, and road data and intersection data for example has same control number with that stored in map server 23.

In addition, information storage apparatus 44 stores advertisement delivery program. Advertisement delivery program is program to output advertisement on display 53 and by speaker 54 of input-output device 42. To be concrete, it is composed of program for transmitting current position information API of automobile 11 from mobile telephone 62 to network navigation center 10, program for receiving advertisement information ADI from network navigation center 10 by mobile telephone 62 and transmitting said received advertisement information ADI to main controller 45, program for outputting advertisement registered in said network navigation center 10 by display 53 and speaker 54 when automobile 11 arrived at a spot for presenting advertisement in the course of travel direction registered in network navigation center 10, and program for requesting driver to select on the basis of advertisement output on display 53 or by speaker 54 a guide path that guides driver to spot mentioned in the advertisement from the spot for presenting advertisement and executing path retrieval when selected.

Main controller 45 is comprised of CPU (Central Processing Unit) 65, flash memory 66, ROM 67, RAM 68, image memory 69, image processor 70, voice processor 71, communication interface 72, sensor input interface 73 and clock 74.

CPU 65 carries out various kinds of processing. Flash memory 66 stores navigational program and advertisement delivery program read from information storage apparatus 44. ROM 67 stores program for checking and updating program stored in flash memory 66.

Random access memory 68 as a memory means is stored retrieved path guide information such as spot coordinate of set destination or road cord number, etc. or data in processing temporarily. In addition, RAM 68 is constituted so as to store temporarily advertisement information ADI (spot for presenting advertisement data etc.) delivered from network navigation center 10 and received by mobile telephone 62.

In image memory 69 image data of map 53b displayed on screen 53a of display unit 53 is memorized. In addition, in image memory 69 advertisement image data of advertisement 53c displayed on screen 53a of display unit 53 is temporarily memorized. Image processor 70 picks up image data from image memory 69 based on display control signal from CPU 65 and after image processing displays map 53b on display unit 53. In addition, image processor 70 picks up advertisement information ADI (advertisement image data) imported in RAM 68 from network navigation center 10 based on display control signal from CPU 65 to temporarily memorize in image memory 69 and after image processing displays advertisement 53c on display unit 53.

Voice processor 71 synthesizes voice for driving guide read from information storage apparatus 44 based on voice output control signal from CPU 65, phrase, single sentence, sound and converts them into analog signal to output to speaker 54. In addition, voice processor 71 converts advertisement information ADI (advertisement voice data) imported from network navigation center 10 to RAM 68 into analog signal based on voice output control signal from CPU 65 and outputs advertisement by voice from speaker 54.

Communication interface 72 delivers data to and from GPS receiver 56 of current position detecting apparatus 43, VICS receiver 60, ATIS receiver/transmitter 61, mobile telephone 62 and main control unit 45. Sensor input interface 73 imports sensing signals from absolute orientation sensor 57 of current position detecting apparatus 43, relative orientation sensor 58 and distance sensor 59 . Clock 74 fills in interior diagnostic information with date and clock time.

And CPU 65 in main controller 45 performs essential action of vehicle navigation device 41 based on navigational program which is read out from information storage apparatus 44 and stored in flash memory 66. In other words, CPU 65 calculates current position at every constant clock time based on each data acquired by current position detecting apparatus 43 and writes in RAM 68 temporarily. The calculated current position is the data processed by map matching in consideration of detection error of various data. As for guide path, CPU 65 is so adapted to select driving means i.e. either screen display or voice output in response to selecting operation by touch switch 51 or key switch 52.

The operation of vehicle navigation device 41 is described as below. Since the essential function of vehicle navigation device 41 such as current position detection, map display, path retrieval and path guide display are similar to conventional operation, action between vehicle navigation device 41 and network navigation center 10 is described in convenience of description.

Now, advertisement information API by each sponsor of the ad is registered in server group 21 of network navigation center 10. On the other hand, vehicle navigation device 41 carried by automobile 11 in travel calculates current position of automobile concerned at constant intervals and displays current position on map 53b displayed on screen 53a of display unit 53 with cursor 53d. Furthermore, vehicle navigation device 41 is set in a mode to receive the delivery of advertisement by the operation of touch switch 51 or key switch 52.

In this condition, CPU 65 of vehicle navigation device 41 outputs current position information API related to current position and travel direction information related to travel direction calculated at every constant time intervals according to advertisement delivery program to mobile telephone 62 via communication interface 72. Mobile telephone 62 calls mobile telephone base station 14 in response to input current position information API and enables communication with network navigation center 10 via public telephone network 16. And mobile telephone 62 transmits input current position information API and travel direction information to network navigation center 10. Then, mobile telephone number of mobile telephone 62 and IP (Internet Protocol) address are transmitted to network navigation center 10 along with current position information API and travel direction information.

When current position information API, travel direction information, mobile telephone number and IP address are input through data converter 22, management server 28 of network navigation center 10 judges whether user is registered in network navigation center 10 based on mobile telephone number and IP address input in accordance with advertisement information delivery program. To be concrete, it is determined according to whether said number agrees with mobile telephone number and IP address of user data stored in advertiser/user server 24.

When there is no number nor IP address to agree with, management server 28 determines that the person is not registered in network navigation center 10, it waits for new current position information API. On the other hand, when there is number or IP address to agree with, management server 28 determines that the person is registered in network navigation center 10 and computes one or plurality of travel paths that seems to be traced by automobile 11 based on current position information API and travel direction information.

Subsequently, management server 28 retrieves whether there is a spot for presenting advertisement registered within a certain distance spaced from current position of automobile 11 on said computed travel path. In other words said retrieval is executed among spot for presenting advertisement data stored in spot for presenting advertisement/advertisement information server 25. And when there is no spot for presenting advertisement data within a certain distance, management server 28 finishes delivery processing action of advertisement information delivery program and waits for next new current position information API etc.

On the contrary, when one or plurality of spots for presenting advertisement is found within a certain distance, management server 28 reads out advertisement data relating to spot for presenting advertisement (advertisement image data and advertisement voice data), guide position data and delivery condition data (presenting time period data, presenting time zone data, age group data, sex distinction data, data by automobile manufacturer, data by vehicle type and vehicle name) from spot for presenting advertisement/advertisement information server 25. Management server 28 judges whether they meet delivery condition data (presenting time period data, presenting time zone data, age group data, sex distinction data, data by automobilemanufacturer, data by vehicle type and vehicle name). When the advertisement data relating to all of the spot for presenting advertisement retrieved does not meet the condition, management server 28 finishes delivery processing action of advertisement information delivery program and waits for next new current position information API etc.

On the contrary, if there exists an advertisement data relating to spot for presenting advertisement that meets the condition, management server 28 outputs advertisement information ADI (spot for presenting advertisement data, travel direction data, advertisement image data, advertisement voice data and guide position data) of all spots for presenting advertisement that meet the condition to mobile telephone base station 14 via data converter 22 and public telephone network 16. And one or plurality of advertisement information ADI output to mobile telephone base station 14 is transmitted from aerial 15 of mobile telephone base station 14 to mobile telephone 62 of vehicle navigation device 41.

After transmission of advertisement information ADI to mobile telephone 62 is finished (i.e. the processing operation of advertisement information delivery program is finished), management server 28 calculates delivery number of times of advertisement delivered according to advertisement information charge program and advertisement delivery charges asked sponsor of the ad for the advertisement (= delivery charge x delivery number of times) and stores delivery number of times, delivery charge and name of user delivered the advertisement in charge server 26 and stops processing of advertisement information charge program temporarily and waits for next new current position information ADI and travel direction information.

On the other hand, when mobile telephone 62 receives one or plurality of advertisement information ADI, CPU 65 stores each advertisement information ADI in RAM 68 temporarily according to advertisement delivery program.

CPU 65 compares one or plurality of advertisement information ADI stored in RAM 68 with current position information API computed by CPU 65 at each time intervals and travel direction information. In other words, retrieval for whether there is a spot for presenting advertisement agreeing with current position is done. And if there is no spot for presenting advertisement agreeing with current position, CPU 65 stops comparing operation until it computes new current position information API and travel direction information and waits for new current position information API and travel direction information.

When there is a spot for presenting advertisement agreeing with current position, CPU 65 judges whether travel direction information agrees with travel direction data added to the spot for presenting advertisement data retrieved. As for the decision, conventional technique of map matching is used, and road now traveling and direction on the way are specified by referring to road data stored in map server 23 and judgment is passed by comparing with said travel direction data. And when travel direction does not agree with, CPU 65 stops comparing processing same as described above and waits for next new current position information API and travel direction information.

On the other hand, when travel direction in a spot for presenting advertisement agrees with, CPU 65 outputs advertisement image data relating to said agreed spot for presenting advertisement data from RAM 68 to image processor 70. Image processor 70 processes advertisement image data based on display control signal from CPU 65 and displays advertisement 53c on display unit 53.

In other words, when automobile 11 arrives at a spot for presenting advertisement, screen 53a of display 53 is replaced by advertisement display from map display. Explaining in detail, whole screen 53a shown in Fig. 4 is replaced display of map 53b by display in which right-half of screen is map 53b and left-half of screen is advertisement 53c based on advertisement image data as shown in Fig. 5. Then image processor 70 displays button 53e noted "GO" on the spot of advertisement 53c in accordance with display control signal based on advertisement delivery program from CPU 65.

In addition, CPU 65 outputs advertisement voice data relating to said agreed spot for presenting advertisement to voice processor 71 from RAM 68. Voice processor 71 processes voice synthesizing of advertisement voice data based on voice control signal from CPU 65 and announces advertisement contents from speaker 54. For example, along with display of advertisement 53c shown in Fig. 5, contents such as "x x shop of Japanese food is 1 km back from the next intersection after turned right thereof." is announced from speaker 54.

Therefore, when automobile 11 passes by spot for presenting advertisement 53c, advertisement 53c is displayed on display unit 53 of vehicle navigation device 41 and advertisement contents is announced from speaker 54. As a result, sponsor of the ad can deliver advertisement to driver surely without putting signboard for advertisement by roadside. In addition, driver can acquire advertisement wanted for in travel on screen 53a and by voice so that driver is liberated from inconvenience of searching drive especially when traveling strange road.

Besides, display etc. of advertisement at spot for processing advertisement is performed in the case that travel direction of automobile 11 is oriented toward location of advertising object (guide position). Therefore, sponsor of the ad can save useless advertisement. Driver is not bothered by watching or hearing advertisement presented at the location (guide position) already traveled.

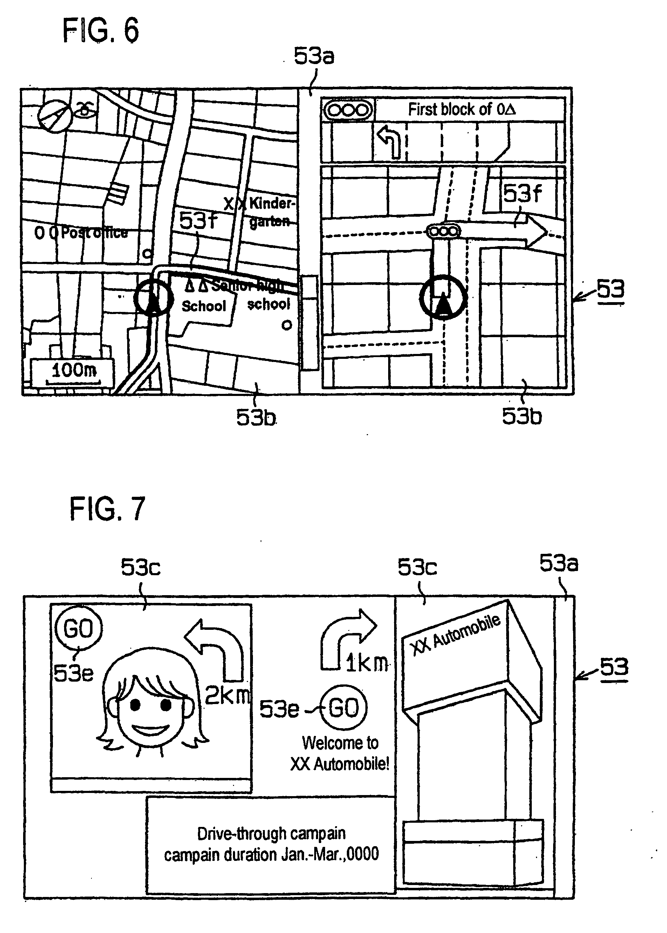

Subsequently, when driver touches button 53e noted "GO" displayed on screen 53a with advertisement 53c, touch switch 51 corresponding to the position of button 53e is turned on. In response to the turn on signal of touch switch 51 CPU 65 executes path retrieval from current position to location of advertising object (guide position) based on guide position data relating to agreed spot for presenting advertisement stored in RAM 68 and computes guide path. After computed guide path, CPU 65 turns off advertisement 53c by image processor 70 and displays map 53b on screen 53a and displays as shown in Fig. 6, index 53f showing guide path to the location (guide position) on map 53b.

Therefore, driver can reach to the location of advertising object (guide position) without deviating from the path only by driving in accordance with index 53f showing the guide path. On reaching the location of advertising object (guide position), CPU 65 completes guiding to guide position and finishes advertisement delivery program and waits for next new current position information API and travel direction information.

In the following description, request of advertisement delivery charges caused by the delivery of advertisement information ADI is explained. Request of advertisement delivery charge is done according to advertisement information charge program of network navigation center 10. When the payment settling day set beforehand comes, management server 28 of network navigation center 10 prepares details of advertisement information ADI delivered from the next day of former payment settling day to payment settling day of this time and advertisement delivery charges respectively for each sponsor of the ad from delivery number of times data and advertisement delivery charges data of charge server 26 according to advertisement information charge program. And management server 28 executes operation of withdrawing advertisement delivery charges for each sponsor of the ad on the basis of their bank account number stored in authentication server 27. Additionally management server 28 prints advertisement delivery charges in specifications with detail of the advertisement information ADI delivered along with withdrawal. Then, the printed specifications are mailed to each sponsor of the ad.

Now feature of the embodiment composed as above is described hereinafter.
(1) According to the present embodiment, since network navigation center 10 delivers advertisement information ADI to vehicle navigation device 41 based on current position of vehicle navigation device 41 and vehicle navigation device 41 presents them on display 53 and by speaker 54, sponsor of the ad can deliver advertisement to driver (user) of automobile 11 carrying vehicle navigation device 41 without putting signboard for advertisement at desired place.
(2) According to the present embodiment, when spot for presenting advertisement lies within a certain distance from predetermined position spaced from current position of automobile 11, in other words when current position of automobile 11 comes near to spot for presenting advertisement, advertisement information is delivered beforehand by network navigation center 10. Therefore, transmitting data with continuously connected line to and from network navigation center 10 is not required and load of each vehicle navigation device 41 over network navigation center 10 is reduced.
(3) According to the present embodiment, since advertisement information ADI is delivered to user registered beforehand, load over network navigation center 10 is reduced furthermore.
(4) According to the present embodiment, on passing a spot for presenting advertisement, advertisement 53c is displayed on display unit 53 and advertisement contents are announced from speaker 54. As a result, sponsor of the ad can deliver advertisement to driver surely without putting signboard for advertisement by roadside. Additionally, driver can get information of desired advertisement on screen 53a and by voice during driving and inconvenience of searching drive is avoided especially when driving strange road.
(5) According to the present embodiment, since the display of an advertisement at a spot for presenting advertisement is permitted only when travel direction of automobile 11 is oriented toward the location of advertising object (guide position), sponsor of the ad need not present useless advertisement and diver is not bothered by watching or hearing advertisement presented at the location (guide position) already passed.
(6) According to the present embodiment, since by touching button 53e noted "GO" displayed on screen 53a along with advertisement 53c, guide path from current position to the location of advertisement object (guide position) is displayed on map 53b on screen 53a, driver can arrive at the location of advertising object without deviating from the path.
(7) According to the present embodiment, each sponsor of the ad operates personal computer 18 over Internet 17, spot for presenting advertisement, travel direction, advertisement image, advertisement voice, guide position, presenting time period, presenting time zone are set by spot for presenting advertisement/advertisement information server 25 over management server 28. Therefore, by only operating personal computer 18, each sponsor of the ad can easily set spot for presenting advertisement and advertisement contents. Besides, spot for presenting advertisement, travel direction, advertisement image, advertisement voice, guide position, presenting time period and presenting time zone stored in spot for presenting advertisement/advertisement information server 25 can easily be changed.
(8) According to the present embodiment, since delivery number of times is stored in charge server 26 at each time when advertisement information ADI is delivered, operating condition of each advertisement can be grasped and also utilized for calculation of advertisement delivery charges to ask for sponsor of the ad.
(9) According to the present embodiment, since delivery condition of advertisement information is set by storing presenting time period and presenting time zone of advertisement information to be delivered in spot for presenting advertisement/advertisement information server 25, sponsor of the ad can avoid useless advertisement and present efficient advertisement. Furthermore, since as delivery condition, age group data, distinction of sex data, data by automobile manufacturer, data by vehicle type and vehicle name data are stored, efficient advertisement can be done only for specific user.
(10) According to the present embodiment, by storing presenting position price at each spot for presenting advertisement, presenting time period price for each presenting time period and presenting time zone price for each presenting time zone beforehand in charge server 26, sponsor of the ad can grasp advertisement delivery charges beforehand and also said prices are utilized for calculation of advertisement delivery charges to ask for sponsors.
(11) According to the present embodiment, since management server 28 prepares details of advertisement information ADI delivered based on delivery number of times data and advertisement delivery charge data of charge server 26 and advertisement delivery charges when the payment settling day set beforehand comes, bill can be made simply and immediately in a payment settling day. In addition, since advertisement delivery charges are withdrawn from the bank according to bank account number of each sponsor of the ad stored in authentication server 27, payment is performed immediately.

In addition, the present invention is not limited to the aforementioned embodiment, the invention may be embodied alternatively as follows.

In the aforementioned embodiment, advertisement was output from both display unit 53 and speaker 54 but in another embodiment advertisement may be output either from display unit 53 or speaker 54.

In the aforementioned embodiment, one advertisement was described concerned at one spot for presenting advertisement but it may of course be possible that several different advertisements can be presented at one spot for presenting advertisement. In this case, as shown in Fig. 7, screen 53a of display unit 53 is divided into plurality of spots and each advertisement 53c is displayed in each spot.

In the aforementioned embodiment, vehicle navigation device 41 executed operation of advertisement presenting program while executing essential action such as current position detection, map display, path retrieval, path guide display. As for this, even in the case vehicle navigation device 41 is in rest, in another embodiment advertisement may be announced on display 53 and by speaker 54 on arriving at the spot for presenting advertisement. In this case it is necessary for vehicle navigation device 41 to add program for detecting current position and traveling direction and transmitting current position information API and travel direction information to network navigation center 10 to advertisement delivery program. In addition, in this case advertisement is displayed on the entire screen of display 53.

In the aforementioned embodiment, when operating button 53e noted "GO" displayed on screen 53a along with advertisement 53c, guide path from current position to the location of advertising object (guide position) is displayed on map 53b of screen 53a, but product, discount coupon or point sheet may be printed out by printer 55 provided in vehicle navigation device 41 along with display. In this case, it is necessary to store for example in spot for presenting advertisement/advertisement information server 25 ticket issuing data whether discount coupon and point sheet are published and design data for printer 55 to print discount coupon and point sheet.

Also, after having operated button 53e noted "GO", on coming near to the spot (e.g. spot back from 100 m, appointed intersection, spot set by sponsor of the ad) set beforehand as location for advertising object (guide position), discount coupon may come to be issued to vehicle navigation device 41.

In the aforementioned embodiment, operating button 53e noted "GO", guide path from current position to location of advertising object (guide position) is displayed on map 53b of screen 53a but in another embodiment detailed information of advertisement may be presented on operating button 53e. For example, if it is a restaurant, menu, price, business hours are displayed and If it is an automobile store, name of the vehicle for sale, price, date of delivery are displayed. In this case, data of detailed information of an advertisement needs to be registered by sponsor of the ad and stored for example in spot for presenting advertisement/advertisement information server 25.

Also, in this case charging may be done against user who got detailed information. To be concrete, use charges may be calculated by management server 28 according to the amount of communication data or use number of times of detailed information delivered to user and use charges may come to be stored in charge server 26. Also, bank account number may be joined to user authentication data consisted of ID code and password stored and managed in authentication server 27 and user may be asked to register the number. Network navigation center 10 can collect charges related to the delivery during a given time period by withdrawing delivery charges from bank account number of the user at each period fixed beforehand.

In the previous embodiment, user's name is stored in charge server 26 at each time when user is delivered advertisement but reception number of times related to advertisement delivery (use number of times) for each user may be stored in charge server 26. Hereby use situation of user can be grasped.

In the previous embodiment, management server 28 judges user whether he or she is registered according to telephone number of mobile telephone 62 but it may be determined based on user's ID code or password. In this case, vehicle navigation device 41 is required to prepare ID code or password and let ID code or password be transmitted from mobile telephone 62 along with current position information API and travel direction information.

Delivery condition data registered and managed in spot for presenting advertisement/advertisement information server 25 in the previous embodiment may be altered to day data. Day data is data relating to day for delivering advertisement, such as for example Saturday or Sunday. In this case also, delivery charges may be set suitably according to day of the week.

In the previous embodiment, delivery condition of advertisement except for whether user is registered or not is determined depending on delivery condition of sponsor of the ad but in another embodiment at network navigation center 10 side delivery may be limited even if sponsor of the ad meets delivery conditions according to user data of the user (for example, age group data, distinction of sex data) or advertisement contents. In addition, in the case of limiting the delivery, it is preferable to indicate beforehand the effect that the conditioning is not appropriate when sponsor of the ad sets delivery condition.

Also, choice of advertisement of business wanted may be executed at user side. In this case, all kinds of business contents may be displayed on display unit 53 of vehicle navigation device 41 and by the operation of touch switch 51 or key switch 52, business contents, for example food and drink business is selected. Vehicle navigation device 41 is required to transmit business contents data of said food and drink business to network navigation center 10 along with current position information API.

In the previous embodiment, delivery number of times and advertisement delivery charges are settled and stored when advertisement information ADI is delivered by network navigation center 10 but delivery number of times and advertisement delivery charges may be calculated and stored when advertisement is output on display 53 and by speaker 54.

In the previous embodiment, advertisement information is delivered from network navigation center 10 beforehand when current position of automobile 11 comes near to spot for presenting advertisement but in another embodiment network navigation center 10 may deliver retrieved advertisement information immediately after spot for presenting advertisement agreeing with current position having been retrieved . In this case, since CPU 65 of vehicle navigation device 41 has only to output advertisement on display unit 53 and by speaker 54 as soon as possible, load over CPU 65 is reduced. Therefore, in this case, advertisement information ADI delivered by network navigation center 10 as advertisement information is advertisement data (advertisement image data, advertisement voice data) and guide position data. Also, on the contrary, advertisement information relating to all spot for presenting advertisement included within given region centered around current position of automobile 11 e.g. region within 5 km around may be delivered beforehand.

Line between vehicle navigation device 41 and network navigation center 10 of the previous embodiment may be held in continuous connection condition in another embodiment. In the previous embodiment, advertisement information ADI could to be delivered only to the user registered in network navigation center 10 beforehand but advertisement information ADI may be delivered to persons not registered on their access to network navigation center 10. In this case, advertisement can be delivered to much more people.

In the previous embodiment, information storage apparatus 44 provided in vehicle navigation device 41 is not specified but it may be the one suited for storing various program or various data e.g. CD, MO, DVD.

In the previous embodiment, advertisement delivery program is stored in information storage apparatus 44 but it may be stored in RAM 68 of main controller 45. In the previous embodiment, guide path to the location is displayed after advertisement display but for example map contraction scale may come to be controlled to display location of advertising object and current position on the same map so that the positional relationship between said two points can be grasped at a glance.

In the previous embodiment, after advertisement display the calculation for path search to display guide path from current position to the location is executed at vehicle navigation device 41 side but path search may be executed in management server 28 of network navigation center 10 and the path information may come to be transmitted to vehicle navigation device 41.

In the previous embodiment, guide path to location was displayed according to guide position data expressed by latitude and longitude but image data e.g. simplified map showing location of advertising object and path to current position may be used in stead of guide position data expressed by latitude and longitude. In this case, sponsor of the ad needs to register image data as for guide position data beforehand in spot for presenting advertisement/advertisement information server 25.

In the previous embodiment, guide path to the location could be displayed after advertisement display but representation of the guide path may be omitted in another embodiment. In the previous embodiment, the advertisement delivery charges had a value of advertisement delivery charge multiplied by delivery number of times but in another embodiment said advertisement delivery price may be determined as advertisement delivery charges.

In the previous embodiment, the advertisement delivery charges were calculated based on advertisement delivery charge and its delivery number of times but said delivery charges may be determined as amount of communication data. In the previous embodiment, vehicle navigation device 41 transmitted current position information API and travel direction information related to travel direction but in another embodiment transmission may be performed merely with current position information API without considering travel direction.

In the previous embodiment, vehicle navigation device 41 is equipped with mobile communication instrument 12 andmobile telephone 62 but vehicle navigation device 41 equipped with receiver/transmitter (wireless installation) capable of transmitting current position information API and travel direction information and receiving advertisement information ADI instead of mobile telephone 62 may be applied alternatively.

In the previous embodiment, mobile communication instrument 12 is realized in vehicle navigation device 41 but it may be realized in mobile telephone comprising a current position detecting means such as GPS apparatus and PDA (Personal Digital Assistants). In this case, advertisement can be delivered to walker carrying mobile telephone.

Also, mobile telephone of this case may be so applied that only advertisement is output on screen and by speaker without displaying map on screen like aforementioned vehicle navigation device 41. Hereby, navigational programetc. which is essential function to vehicle navigation device 41 becomes needless in mobile telephone.

Also, in the case of mobile telephone equipped with current position detecting means such as GPS apparatus and PDA, data of electric discount coupon or electric point may be transmitted from network navigation center 10 without issuing aforementioned discount coupon. And after arriving at shops etc., electric discount coupon or electric point may be displayed on the display of mobile telephone or PDA by key operation based on aforementioned data, and by submitting discount information or point information to store clerk etc., discount or a privilege of product or service may come to be given.

Advertisement 53c displayed on display 53 of vehicle navigation device 41 or mobile telephone equipped with current position detecting means such as GPS apparatus or display of PDA may be moving image. In this case, advertisement image data becomes moving image data and sponsor of the ad is required to register advertisement image data of moving image in spot for presenting advertisement/advertisement information server 25 beforehand.

Also in this case, since the contents of advertisement information are moving image, delivery charges may be set different price from static image. In the previous embodiment, delivery charges are withdrawn automatically from bank account of each sponsor of the ad but in another embodiment it may be withdrawn from another financial institution or it may be transferred from financial institution by mailing bill to sponsor of the ad.

In the previous embodiment, payment dealing of advertisement delivery charges is done every fixed time period but payment dealing of advertisement delivery charges may be done at anytime on each delivery.

According to the present invention of claims 1 to 12, 28 and 30, sponsor of the ad can provide advertisement without putting signboard for advertisement at desired position.

According to the present invention of claim 2, registration of advertisement information, preparing and request of advertisement delivery charges are easily done. According to the present invention of claim 3, spot for presenting advertisement and advertisement contents are easily changed.

According to the present invention of claim 4, use condition of advertisement is grasped. According to the present invention of claim 5, use condition of advertisement is grasped by each mobile communication instrument.

According to the present invention of claim 7, finer service is provided. According to the present invention of claims 8, 9, useless advertisement may be avoided.

According to the present invention of claims 13 to 18 and 27, sponsor of the ad can register desired spot for presenting advertisement and advertisement contents easily from distant place. In addition, according to the present invention of claims 15 and 16, fine and efficient registration of advertisement are made possible.

According to the present invention of claim 17, advertisement delivery charges are grasped beforehand. According to the present invention of claim 18, each delivery condition of advertisement is grasped.

According to the present invention of claim 19 to 25 and 29, advertisement delivery charges is prepared easily. According to the present invention of claim 26, wanted advertisement is obtained easily.

## Claims

1. Mobile advertisement information delivering method, said method comprising delivering advertisement information from advertisement information delivery apparatus to mobile communication instrument based on current position information transmitted therefrom.

2. Mobile advertisement information delivering method comprising delivering advertisement information to mobile communication instrument by computer system, said method comprising:
step for storing advertisement information to present advertisement at a spot for presenting advertisement set by sponsor of the ad.;
step for receiving current position information of mobile communication instrument;
step for retrieving advertisement information relating to current position from said stored advertisement information based on current position information of said mobile communication instrument;
step for delivering said retrieved advertisement information to said mobile communication instrument;
step for calculating advertisement delivery charges caused by said delivery; and
step for charging or liquidating by payment said calculated advertisement delivery charges to sponsor of the ad.

3. Mobile advertisement information delivering system comprising:
advertisement information storage means for storing advertisement information to present advertisement at spot for presenting advertisement set by sponsor of the ad;
mobile communication instrument detecting current position and transmitting said current position information and receiving said advertisement information and outputting advertisement based on said advertisement information to output part; and
advertisement information delivery means for receiving current position information from said mobile communication instrument and retrieving advertisement information relating to either of spot for presenting advertisement agreeing with said current position or spot for presenting advertisement lying nearby current position from said advertisement information storage means and delivering said retrieved advertisement information to said mobile communication instrument.

4. Mobile advertisement information delivery system according to claim 3 wherein said advertisement information delivery means having delivery number of times storage means for storing delivery number of times of advertisement information at each time when advertisement information is delivered to mobile communication instrument.

5. Mobile advertisement information delivery system according to claim 3 or 4 wherein said advertisement information delivery means having use number of times storage means for storing use number of times concerning mobile communication instrument as delivery target of advertisement information at each time when advertisement information is delivered thereto.

6. Mobile advertisement information delivery system according to any of claims 3 to 5 wherein advertisement information relating to spot for presenting advertisement stored in said advertisement information storage means includes image data picturing at least one advertisement of trade name, pet name, business contents, brand name, guide map, whereby said output part of said mobile communication instrument is a display part displaying advertisement thereon based on said image data.

7. Mobile advertisement information delivery system according to any of claims 3 to 6 wherein said advertisement information storage means stores location position information for retrieving a path from current position to advertising location and displaying said path from current position to advertising location on display part of said mobile communication instrument.

8. Mobile advertisement information delivery system according to any of claims 3 to 7 comprising delivery condition storage means for storing delivery condition of advertisement information whereby said advertisement information delivery means determines delivery to said mobile communication instrument according to said delivery condition.

9. Mobile advertisement information delivery system according to claim 8 wherein said delivery condition is at least either one of presenting time period, presenting time zone, day, age group, sex distinction.

10. Mobile advertisement information delivery system according to any of claims 3 to 9 wherein said mobile communication instrument is navigation device carried by a vehicle, said navigation device comprising transmitter transmitting current position information to said advertisement information delivery means and receiver receiving advertisement information.

11. Mobile advertisement information delivery system according to any of claims 3 to 9 wherein said mobile communication instrument comprises navigation device carried by a vehicle and mobile telephone, and said navigation device transmits current position information and advertisement information to and from advertisement information delivery means through said mobile telephone.

12. Mobile advertisement information delivery system according to any of claims 3 to 9 wherein said mobile communication instrument is mobile telephone, and said mobile telephone is provided with current position detecting means for detecting current position of own.

13. Mobile advertisement information registration system comprising:
advertisement information delivery means for delivering advertisement information to mobile communication instrument based on current position information transmitted from said mobile communication instrument;
advertisement information input means for setting advertisement information to present advertisement at spot for presenting advertisement by sponsor of the ad;
advertisement information storage means for storing advertisement information; and
management means for delivering data between said advertisement information input means over Internet or wireless Internet and writing advertisement information from said advertisement information input means in advertisement information storage means.

14. Mobile advertisement information registration system according to claim 13 wherein said advertisement information input means is personal computer or mobile communication instrument.

15. Mobile advertisement information registration system according to claim 13 or 14 comprising delivery condition storage means for storing delivery condition relating to said advertisement information whereby delivery condition along with said advertisement information is input by said advertisement information input means and so is stored in corresponding storage means respectively through said management means.

16. Mobile advertisement information registration system according to claim 15 wherein said advertisement delivery condition is at least either one of presenting time period, presenting time zone, day, age group, sex distinction.

17. Mobile advertisement information registration system according to any of claims 13 to 16 comprising price information storage means for storing delivery price relating to at least one of said advertisement information and delivery condition whereby said price information storage means outputs said delivery price to advertisement information input means through management means.

18. Mobile advertisement information registration system according to any of claims 13 to 17 comprising delivery number of times storage means for storing delivery number of times at each time when advertisement information is delivered from said advertisement information delivery means to mobile communication instrument.

19. Mobile advertisement information charge system comprising management means for calculating based on advertisement contents or delivery condition advertisement delivery charges of advertisement information delivered from advertisement information delivery means to mobile communication instrument according to current position information transmitted therefrom.

20. Mobile advertisement information charge system comprising:
advertisement information storage means for storing advertisement information to present advertisement at spot for presenting advertisement set by sponsor of the ad;
advertisement information delivery means for delivering advertisement information to mobile communication instrument based on current position information transmitted from mobile communication instrument;
advertisement delivery charge storage means for storing advertisement delivery charges caused by delivery of the advertisement information; and
management means for calculating advertisement delivery charges based on delivery price relating to at least one of advertisement contents delivered and advertisement delivery condition, and storing the resultant in said advertisement delivery charges storage means.

21. Mobile advertisement information charge system comprising management means for calculating based on delivery number of times advertisement delivery charges of advertisement information delivered from advertisement information delivery means to mobile communication instrument based on current position information transmitted therefrom.

22. Mobile advertisement information charge system comprising:
advertisement information storage means for storing advertisement information to present advertisement at spot for presenting advertisement set by sponsor of the ad;
advertisement information delivery means for delivering advertisement information to said mobile communication instrument based on current position information transmitted therefrom;
advertisement delivery charge storage means for storing advertisement delivery charges caused by advertisement information delivery; and
management means for calculating advertisement delivery charges based on delivery number of times of delivered advertisement information and storing said delivery charges in said advertisement delivery charge storage means.

23. Mobile advertisement information charge system comprising management means for calculating based on amount of communication data advertisement delivery charges of advertisement information delivered from advertisement information delivery means to mobile communication instrument based on current position information transmitted therefrom.

24. Mobile advertisement information charge system comprising:
advertisement information storage means storing advertisement information to present advertisement at spot for presenting advertisement set by sponsor of the ad set;
advertisement information delivery means for delivering said advertisement information to mobile communication instrument based on current position information transmitted therefrom;
advertisement delivery charge storage means for storing advertisement delivery charges caused by delivery of said advertisement information; and
management means for calculating advertisement delivery charges based on amount of communication data when said advertisement information is delivered and storing delivery charges in said advertisement delivery charge storage means.

25. Mobile advertisement information charge system comprising:
advertisement information storage means for storing advertisement information to present advertisement at spot for presenting advertisement set by sponsor of the ad;
advertisement information delivery means for delivering said advertisement information to mobile communication instrument based on current position information transmitted therefrom;
advertisement delivery charge storage means for storing advertisement delivery charges caused by delivery of said advertisement information;
price information storage means for storing delivery charge relating to at least either one of the advertisement information or delivery condition; and
management means for calculating advertisement delivery charge based on delivery number of times and delivery charges of advertisement information at each time when said advertisement information is delivered, and storing said delivery charges in said advertisement delivery charge storage means.

26. Mobile communication instrument having current position detecting means for detecting current position and display part displaying picture image comprising storage means for storing advertisement information beforehand relating to spot for presenting advertisement where advertisement is presented, and advertisement presenting control means for presenting advertisement information relating to spot for presenting advertisement on said display part when current position detected by said current position detecting means agrees with said spot for presenting advertisement.

27. Recording medium storing advertisement information registration program for processing steps by computer, said steps comprising:
step for making sponsor of the ad input spot for presenting advertisement;
step for storing spot for presenting advertisement input by sponsor of the ad;
step for making sponsor of the ad input advertisement presented at spot for presenting advertisement;
step for storing advertisement input by sponsor of the ad and presented at spot for presenting advertisement;
step for making sponsor of the ad input advertisement delivery condition; and
step for storing delivery condition input by sponsor of the ad.

28. Recording medium storing advertisement information delivery program for processing steps by computer, said steps comprising;
step for inputting current position information from mobile communication instrument and retrieving advertisement information relating to either of spot for presenting advertisement relating to current position information from advertisement information storage means storing advertisement information at spot for presenting advertisement or spot for presenting advertisement nearby current position; and
step for delivering retrieved advertisement information to said mobile communication instrument.

29. Recording medium storing advertisement information charge program for processing steps by computer, said steps comprising;
step for calculating advertisement delivery charges caused by delivery for each sponsor of the ad;
step for preparing details of advertisement information delivered to each sponsor of the ad during a given time period and advertisement delivery charges;
step for withdrawing advertisement delivery charges of each sponsor of the ad from their bank account; and
step for preparing details of advertisement information delivered and advertisement delivery charges in specifications.

30. Recording medium storing advertisement information presenting program for processing steps by computer, said steps comprising step for computing current position and transmitting said computed current position, and step for displaying advertisement on display part based on advertisement information received.
